# EUROPEAN PATENT APPLICATION

(11) **EP 4 340 212 A1**
(43) Date of publication of application: **20.03.2024**
(21) Application number: 22860264.5
(22) Date of filing: 11.08.2022
(51) Int. Cl.: H02P 21/22, H02P 21/30, B60L 58/27, H02P 27/04, H02P 27/02

(54) **ELECTRIC MOTOR CONTROL METHOD AND ELECTRIC VEHICLE**

(30) Priority: 26.08.2021 CN 202110989058
(71) Applicant: China Faw Co., Ltd., Changchun, Jilin 130011 (CN)
(72) Inventor: ZHAO, Huichao, Changchun, Jilin 130011 (CN); LI, Yan, Changchun, Jilin 130011 (CN); PAN, Zhongliang, Changchun, Jilin 130011 (CN); DONG, Lijia, Changchun, Jilin 130011 (CN); LIU, Yachuan, Changchun, Jilin 130011 (CN)
(74) Representative: Grassi, Stefano
(86) International application number: PCT/CN2022/111705
(87) International publication number: WO 2023/024918

(57) **Abstract**

Provided are a motor control method and an electric vehicle. The motor control method includes: in a mode of a motor outputting torque, converting a torque instruction value into a d-axis current instruction and a q-axis current instruction by a torque-current instruction calculation module; in a battery heating mode, generating at least one of a d-axis voltage heating instruction or a d-axis current heating instruction by a heating instruction generation module, where the d-axis voltage heating instruction and the d-axis current heating instruction both include waveform instructions of amplitude and frequency changes; and driving, by a motor driving module, a motor to output a set torque according to the d-axis current instruction and the q-axis current instruction, or driving the motor according to at least one of the d-axis voltage heating instruction or the d-axis current heating instruction, so as to heat a power battery in the form of charging and discharging.

## Description

### Cross-Reference to Related Application

The disclosure claims priority to Chinese Patent Application No. 202110989058.3 filed to the China National Intellectual Property Administration on August 26, 2021, the disclosure of which is hereby incorporated by reference in its entirety.

### Technical Field

Embodiments of the disclosure relate to the technical field of electric vehicles, for example, to a motor control method and an electric vehicle.

### Background

As the important component form of future automobiles, electric and hybrid vehicles have gained widespread attention from people and all sectors of society because of high fuel economy while producing fewer polluting emissions.

The main source power for the electric and hybrid vehicles is a power battery, and battery energy needs to be replenished through recharging. When the ambient temperature is relatively low, large-power battery charging cannot be performed immediately due to the limitation of the characteristics of batteries. Therefore, under a low-temperature working condition, pre-heating of the batteries needs to be completed, and large-power charging is then performed when a battery temperature reaches a preference temperature. There are two main heating modes of a battery system, including internal heating and external heating. The internal heating mode is directly heat the internal of the battery by means of battery resistance and a chemical reaction inside the battery, for example, high and low frequency Alternating Current (AC) heating, battery internal discharging heating, etc. the external heating mode is to produce heat by means of an external heating component, so as to perform heating on the battery from outside, for example, hot air heating, liquid heating, phase-change material heating, heating film heating, Positive Temperature Coefficient (PTC) heating, etc.

In a heating process, the conventional heating mode creates a radial reciprocating force at a motor end of the entire vehicle system, generating large heating noise.

### Summary

Embodiments of the disclosure provide a motor control method and an electric vehicle, to uniformly heat a power battery without increasing automobile manufacturing costs, so as to improve a charging speed and efficiency of a vehicle and significantly weaken noise generated during battery heating.

An embodiment of the disclosure provides a motor control method, which is executed by a motor controller. The motor controller includes a control module and a motor driving module. The control module includes a torque-current instruction calculation module and a heating instruction generation module. The motor driving module is connected to a power battery and a motor. The method includes: in a mode of a motor outputting torque, converting the torque instruction value into a d-axis current instruction and a q-axis current instruction by the torque-current instruction calculation module; in a battery heating mode, generating at least one of a d-axis voltage heating instruction or a d-axis current heating instruction by the heating instruction generation module, where the d-axis voltage heating instruction and the d-axis current heating instruction both include waveform instructions of amplitude and frequency changes; and driving, by the motor driving module, the motor to output a set torque according to the d-axis current instruction and the q-axis current instruction, or driving the motor according to at least one of the d-axis voltage heating instruction or the d-axis current heating instruction, so as to heat the power battery in the form of charging and discharging.

An embodiment of the disclosure further provides an electric vehicle, which includes a motor controller, a motor, and a power battery. The motor controller includes a control module and a motor driving module. The control module includes a torque-current instruction calculation module and a heating instruction generation module. The motor driving module is connected to the power battery and the motor. The torque-current instruction calculation module is configured to, in a mode of a motor outputting torque, convert a torque instruction value into a d-axis current instruction and a q-axis current instruction. The heating instruction generation module is configured to, in a battery heating mode, generate at least one of a d-axis voltage heating instruction or a d-axis current heating instruction. The d-axis voltage heating instruction and the d-axis current heating instruction both include waveform instructions of amplitude and frequency changes. The motor driving module is configured to drive the motor to output a set torque according to the d-axis current instruction and the q-axis current instruction, or drive the motor according to at least one of the d-axis voltage heating instruction or the d-axis current heating instruction, so as to heat the power battery in the form of charging and discharging.

### Brief Description of the Drawings

Fig. 1 is a flowchart of a motor control method according to Embodiment I of the disclosure.
Fig. 2 is a flowchart of a motor control method according to Embodiment II of the disclosure.
Fig. 3 is a schematic structural diagram of a power system of an electric vehicle according to Embodiment III of the disclosure.
Fig. 4 is a schematic structural diagram of a heating instruction generation module of an electric vehicle according to Embodiment IV of the disclosure.
Fig. 5 is a schematic diagram of an internal structure of a first random amplitude instruction generation module according to Embodiment IV of the disclosure.
Fig. 6 is a schematic diagram of an internal structure of a first random frequency instruction generation module according to Embodiment IV of the disclosure.
Fig. 7 is a schematic structural diagram of a heating instruction generation module of another electric vehicle according to Embodiment IV of the disclosure.
Fig. 8 is a schematic structural diagram of a d-axis voltage heating instruction generation module of an electric vehicle according to Embodiment V of the disclosure.
Fig. 9 is a schematic structural diagram of a q-axis voltage heating instruction generation module of an electric vehicle according to Embodiment V of the disclosure.
Fig. 10 is a schematic structural diagram of a power system of an electric vehicle according to Embodiment VI of the disclosure.
Fig. 11 is a functional block diagram of a power system of an electric vehicle according to Embodiment VI of the disclosure.
Fig. 12 is a schematic diagram of a motor rotor position of an electric vehicle that does not enter a battery heating mode under a parking working condition according to Embodiment VI of the disclosure.
Fig. 13 is a schematic diagram of a motor rotor position of an electric vehicle that enters a battery heating mode under a parking working condition according to Embodiment VI of the disclosure.

### Detailed Description of the Embodiments

Embodiments of the disclosure are described below with reference to the accompanying drawings and embodiments. It is understandable that, the embodiments described here are merely used for explaining the disclosure rather than limiting the disclosure. In addition, it is further to be noted that, for ease of description, only the structures related to the embodiments of the disclosure are shown in the drawings.

### Embodiment I

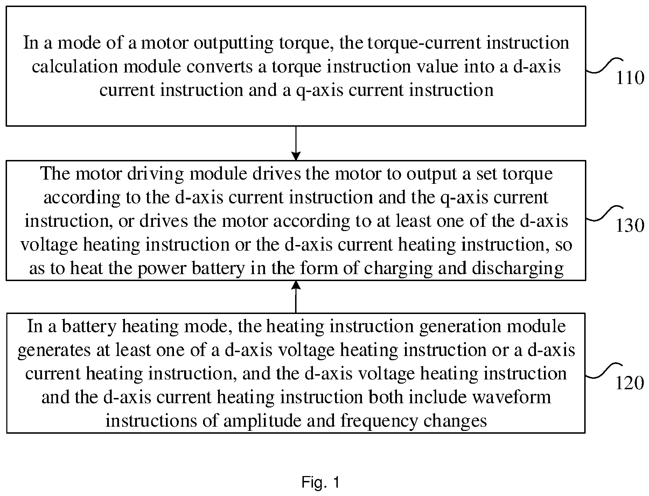

Fig. 1 is a flowchart of a motor control method according to Embodiment I of the disclosure. This embodiment may be suitable for a power battery heating scenario of any device having a motor controller. The method may, but is not limited to, be executed by using an electric vehicle in this embodiment of the disclosure as an execution subject. The execution subject may be implemented by means of software and/or hardware. The method is executed by a motor controller. The motor controller includes a control module and a motor driving module. The control module includes a torque-current instruction calculation module and a heating instruction generation module. The motor driving module is connected to a power battery and a motor. As shown in Fig. 1, the method includes the following steps.

At S110, in a mode of a motor outputting torque, the torque-current instruction calculation module converts a torque instruction value into a d-axis current instruction and a q-axis current instruction.

The power battery may be any rechargeable battery, and is not limited in this embodiment of the disclosure. For example, the power battery may be a lithium battery, or may be a nickel-metal hydride battery, or may be a sodium-solphur battery, or may be a lead-acid battery. The packaging type of the power battery may be a battery cell, or may be a battery module, or may be a battery pack.

The motor controller may be a Direct-Current (DC) motor controller, or may be an AC motor controller. The driving mode of the motor controller may be any driving mode, and is not limited in this embodiment of the disclosure. For example, the driving mode may be Direct Torque Control (DTC).

A connection link between the power battery and the motor driving module may be an electrical link, and a connection link between the motor and the motor driving module may also be the electrical link.

The torque-current instruction calculation module is configured to convert the torque instruction value into the d-axis current instruction and the q-axis current instruction.

As a conversion object of the torque-current instruction calculation module, the torque instruction value is converted into the d-axis current instruction and the q-axis current instruction. A signal type of the torque instruction value may be a digital signal, and a numerical system of the torque instruction value may be binary. This embodiment of the disclosure is not limited thereto. A transmission mode of the torque instruction value may be wired transmission, or may be wireless transmission.

Signal types of the d-axis current instruction and the q-axis current instruction may be analog signals. This embodiment of the disclosure is not limited thereto. Transmission modes of the d-axis current instruction and the q-axis current instruction may be wired transmission, or may be wireless transmission.

At S120, in a battery heating mode, the heating instruction generation module generates at least one of a d-axis voltage heating instruction or a d-axis current heating instruction, and the d-axis voltage heating instruction and the d-axis current heating instruction both include waveform instructions of amplitude and frequency changes.

The heating instruction generation module is configured to generate the d-axis voltage heating instruction and/or the d-axis current heating instruction.

Signal types of the d-axis voltage heating instruction and the d-axis current heating instruction may be analog signals. This embodiment of the disclosure is not limited thereto. Transmission modes of the d-axis voltage heating instruction and the d-axis current heating instruction may be wired transmission, or may be wireless transmission.

An amplitude and frequency change rule of the waveform instructions of amplitude and frequency changes may be any change rule insofar as the safe, normal and stable operation of a vehicle system is guaranteed. This embodiment of the disclosure is not limited thereto.

At S130, the motor driving module drives the motor to output a set torque according to the d-axis current instruction and the q-axis current instruction, or drives the motor according to at least one of the d-axis voltage heating instruction or the d-axis current heating instruction, so as to heat the power battery in the form of charging and discharging.

The type of the motor may be a Permanent Magnet Synchronous Motor (PMSM), or may be an AC Asynchronous Motor (ACMC), or may be a Brushless DC Motor (BLDC), or may be an Excitation Motor (EEM).

As an output result of the torque-current instruction calculation module, the d-axis current instruction and the q-axis current instruction are configured to provide instruction reference to the motor driving module, so as to drive the motor to output the set torque.

A setting mode of the set torque may be set by an operator in advance or according to situations, or may be initially set by a system.

In another embodiment, optionally, in the mode of the motor outputting torque, the torque-current instruction calculation module converts the torque instruction value into the d-axis current instruction and the q-axis current instruction. In the battery heating mode, the heating instruction generation module generates at least one of a q-axis voltage heating instruction or a q-axis current heating instruction, and the q-axis voltage heating instruction and the q-axis current heating instruction both include the waveform instructions of amplitude and frequency changes. The motor driving module drives the motor to output a set torque according to the d-axis current instruction and the q-axis current instruction, or drives the motor according to at least one of the q-axis voltage heating instruction or the q-axis current heating instruction, so as to heat the power battery in the form of charging and discharging.

According to the technical solution of this embodiment, on the basis of an existing power system of a vehicle, in the mode of the motor outputting torque, the torque instruction value is converted into the d-axis current instruction and the q-axis current instruction by means of the torque-current instruction calculation module; and in the battery heating mode, the waveform instructions of amplitude and frequency changes are generated by means of providing the heating instruction generation module, the motor driving module drives the motor according to the waveform instructions of amplitude and frequency changes, and the power battery is heated in the form of charging and discharging. In this way, the problems of large heating noise, poor heating uniformity, high hardware cost and low heating efficiency of an existing battery heating mode are solved. Therefore, the effect of uniformly heating the power battery on the basis of an existing power system of the vehicle, shortening the low-temperature charging time of the vehicle, and significantly weakening battery heating noise without increasing automobile manufacturing costs is achieved.

### Embodiment II

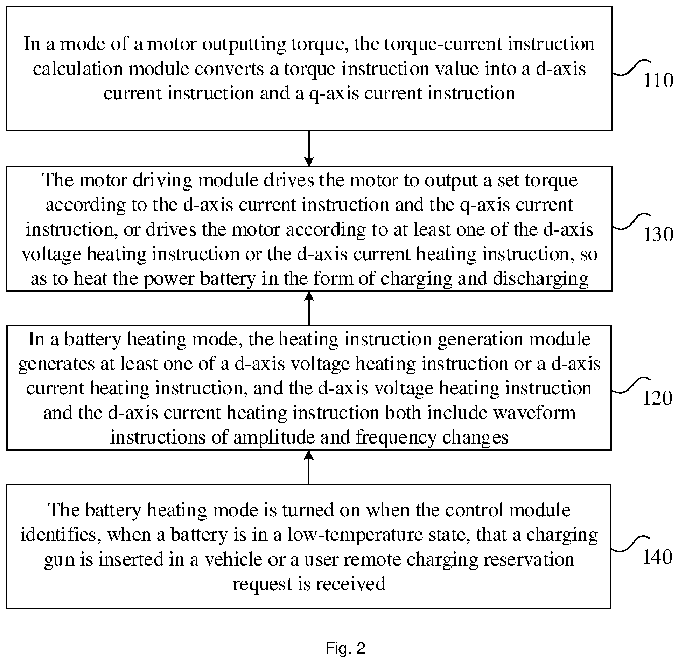

Fig. 2 is a flowchart of a motor control method according to Embodiment II of the disclosure. This embodiment is added on the basis of Embodiment I of the disclosure. As shown in Fig. 2, optionally, the motor control method further includes the following steps.

At S140, the battery heating mode is turned on when the control module identifies, when a battery is in a low-temperature state, that a charging gun is inserted in a vehicle or a user remote charging reservation request is received.

Threshold setting in the low-temperature state may be initial parameter setting of a vehicle system, or may be set by a user.

Optionally, in the battery heating mode, the q-axis current instruction and a q-axis voltage instruction are zero.

Optionally, the step of driving the motor by the motor driving module according to at least one of the d-axis voltage heating instruction or the d-axis current heating instruction includes: outputting, by the motor driving module, a driving signal to the motor according to at least one of the d-axis voltage heating instruction or the d-axis current heating instruction, so as to control the motor to not rotate.

As an output signal of the motor driving module and an input control signal of the motor, the driving signal is configured to control the motor to not rotate. The signal type of the driving signal may be a digital signal, and a numerical system of the driving signal may be binary. This embodiment of the disclosure is not limited thereto. A transmission mode of the driving signal may be wired transmission, or may be wireless transmission.

In another embodiment, optionally, in the mode of the motor outputting torque, the torque-current instruction calculation module converts the torque instruction value into the d-axis current instruction and the q-axis current instruction.

The battery heating mode is turned on when the control module identifies, when a battery is in the low-temperature state, that the charging gun is inserted in the vehicle or the user remote charging reservation request is received.

In the battery heating mode, the heating instruction generation module generates at least one of a q-axis voltage heating instruction or a q-axis current heating instruction, and the q-axis voltage heating instruction and the q-axis current heating instruction both include the waveform instructions of amplitude and frequency changes.

The motor driving module drives the motor to output a set torque according to the d-axis current instruction and the q-axis current instruction, or drives the motor according to at least one of the q-axis voltage heating instruction or the q-axis current heating instruction, so as to heat the power battery in the form of charging and discharging.

In the battery heating mode, the d-axis current instruction and the d-axis voltage instruction are zero.

The step of driving the motor by the motor driving module according to at least one of the q-axis voltage heating instruction or the q-axis current heating instruction includes: outputting, by the motor driving module, a driving signal to the motor according to at least one of the q-axis voltage heating instruction or the q-axis current heating instruction, so as to control the motor to not rotate.

According to the technical solution of this embodiment, on the basis of the existing power system of a vehicle, by means of turning on the battery heating mode when the control module identifies, when a battery is in a low-temperature state, that a charging gun is inserted in a vehicle or a user remote charging reservation request is received, the problems that an existing battery heating mode can only perform battery heating when the user is in the vehicle, hardware costs are high and heating time is long are solved. Therefore, the effect that the user can remotely reserve battery heating in advance, so as to shorten the low-temperature charging time of the vehicle without increasing automobile manufacturing costs is achieved.

In addition, according to the technical solution of this embodiment, in the motor output torque mode, the torque instruction value is converted into the d-axis current instruction and the q-axis current instruction by means of the torque-current instruction calculation module; and in the battery heating mode, the waveform instructions of amplitude and frequency changes are generated by means of providing the heating instruction generation module, the motor driving module drives the motor according to the waveform instructions of amplitude and frequency changes, and the power battery is heated in the form of charging and discharging. In this way, the defects of large heating noise, poor heating uniformity, and low heating efficiency of the existing battery heating mode are filled. Therefore, the effect of uniformly heating the power battery on the basis of an existing power system of the vehicle, improving the low-temperature charging efficiency of the vehicle, and significantly weakening battery heating noise is achieved.

### Embodiment III

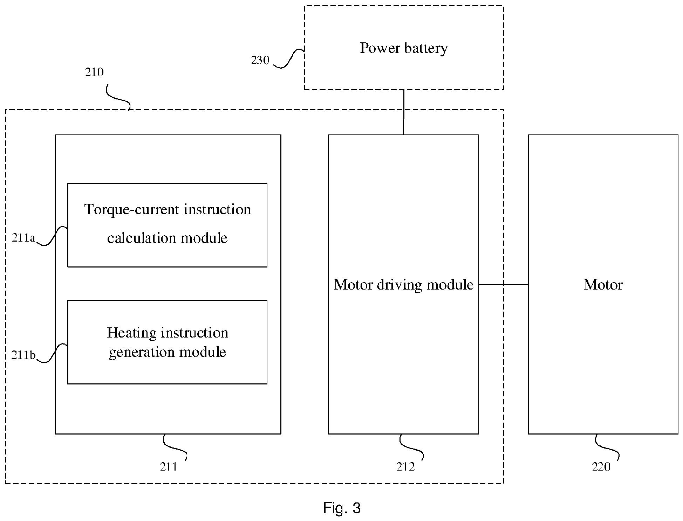

Fig. 3 is a schematic structural diagram of a power system of an electric vehicle according to Embodiment III of the disclosure. As shown in Fig. 3, the power system of an electric vehicle includes a motor controller 210, a motor 220, and a power battery 230. The motor controller 210 includes a control module 211 and a motor driving module 212. The control module 211 includes a torque-current instruction calculation module 211a and a heating instruction generation module 211b. The motor driving module 212 is connected to the power battery 230 and the motor 220.

The torque-current instruction calculation module 211a is configured to, in a mode of the motor 220 outputting torque, convert a torque instruction value into a d-axis current instruction and a q-axis current instruction.

The heating instruction generation module 211b is configured to, in a battery heating mode, generate at least one of a d-axis voltage heating instruction or a d-axis current heating instruction, and the d-axis voltage heating instruction and the d-axis current heating instruction both include waveform instructions of amplitude and frequency changes.

The motor driving module 212 drives the motor 220 to output a set torque according to the d-axis current instruction and the q-axis current instruction, or drives the motor 220 according to at least one of the d-axis voltage heating instruction or the d-axis current heating instruction, so as to heat the power battery 230 in the form of charging and discharging.

The d-axis voltage heating instruction may be an alternating voltage instruction that is in any form and includes the amplitude and frequency changes. This embodiment of the disclosure is not limited thereto. For example, the d-axis voltage heating instruction may be the alternating voltage instruction that is in a square wave form and includes the amplitude and frequency changes, or may be the alternating voltage instruction that is in a sine wave form and includes the amplitude and frequency changes, or may be the alternating voltage instruction that is in a triangular wave form and includes the amplitude and frequency changes, or may be the alternating voltage instruction that is in a trapezoidal wave form and includes the amplitude and frequency changes, or may be the alternating voltage instruction that is in a step wave form and includes the amplitude and frequency changes.

The d-axis current heating instruction may be an alternating current instruction that is in any form and includes the amplitude and frequency changes. This embodiment of the disclosure is not limited thereto. For example, the d-axis current heating instruction may be the alternating current instruction that is in a square wave form and includes the amplitude and frequency changes, or may be the alternating current instruction that is in a sine wave form and includes the amplitude and frequency changes, or may be the alternating current instruction that is in a triangular wave form and includes the amplitude and frequency changes, or may be the alternating current instruction that is in a trapezoidal wave form and includes the amplitude and frequency changes, or may be the alternating current instruction that is in a step wave form and includes the amplitude and frequency changes.

In another embodiment, optionally, the torque-current instruction calculation module 211a is configured to, in a mode of the motor 220 outputting torque, convert a torque instruction value into a d-axis current instruction and a q-axis current instruction.

The heating instruction generation module 211b may be configured to, in a battery heating mode, generate at least one of a q-axis voltage heating instruction or a q-axis current heating instruction, and the q-axis voltage heating instruction and the q-axis current heating instruction both include waveform instructions of amplitude and frequency changes.

The motor driving module 212 may be configured to drive the motor 220 to output the set torque according to the d-axis current instruction and the q-axis current instruction, or drive the motor 220 according to at least one of the q-axis voltage heating instruction or the q-axis current heating instruction, so as to heat the power battery 230 in the form of charging and discharging.

According to the technical solution of this embodiment, on the basis of the existing power system of the vehicle, in the mode of the motor outputting torque, the torque instruction value is converted into the d-axis current instruction and the q-axis current instruction by the torque-current instruction calculation module. In the battery heating mode, the heating instruction generation module generates the d-axis voltage heating instruction and/or the d-axis current heating instruction of amplitude and frequency changes; and the motor driving module drives the motor according to the d-axis voltage heating instruction and/or the d-axis current heating instruction, so as to heat the power battery in the form of charging and discharging. In this way, the disadvantages of large heating noise, poor heating uniformity, high hardware cost and low heating efficiency of an existing battery heating mode are overcome, such that the effect of uniformly heating the power battery on the basis of an existing power system of the vehicle, shortening the low-temperature charging time of the vehicle, and significantly weakening battery heating noise without increasing automobile manufacturing costs is achieved.

### Embodiment IV

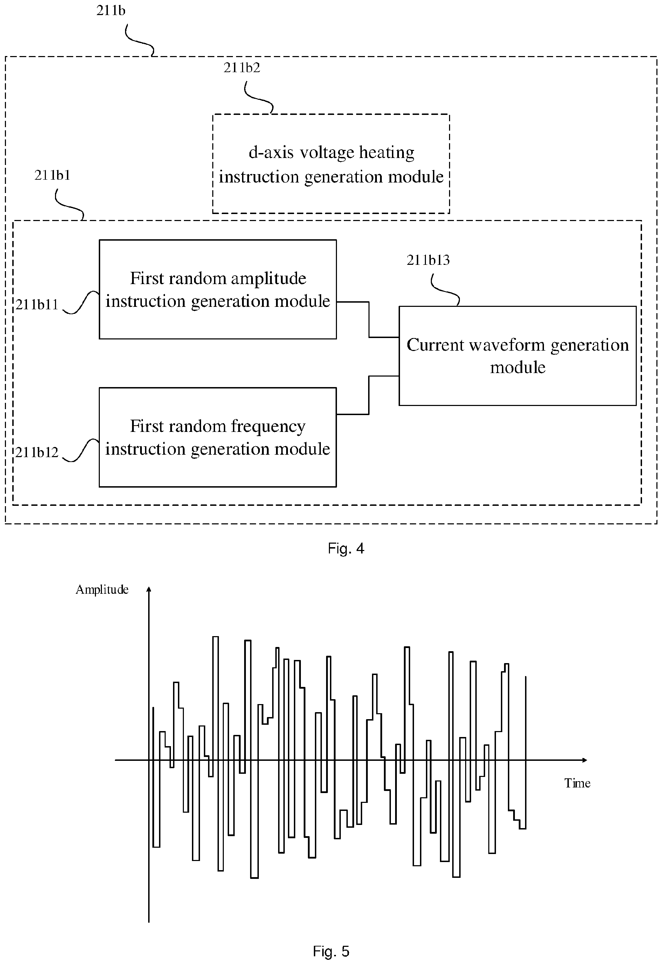

Fig. 4 is a schematic structural diagram of a heating instruction generation module of an electric vehicle according to Embodiment IV of the disclosure. This embodiment is described on the basis of Embodiment III of the disclosure. As shown in Fig. 4, optionally, the heating instruction generation module 211b includes a d-axis current heating instruction generation module 211b1 and/or a d-axis voltage heating instruction generation module 211b2.

The d-axis current heating instruction generation module 211 b1 is configured to generate the d-axis current heating instruction of amplitude and frequency changes.

The d-axis voltage heating instruction generation module 211b2 is configured to generate the d-axis voltage heating instruction of amplitude and frequency changes.

Optionally, the d-axis current heating instruction generation module 211b1 includes a first random amplitude instruction generation module 211b11, a first random frequency instruction generation module 211b12, and a current waveform generation module 211b13.

The first random amplitude instruction generation module 211b11 is configured to generate a set waveform amplitude instruction.

The first random frequency instruction generation module 211b12 is configured to generate a set waveform frequency instruction.

The current waveform generation module 211b13 is configured to output a d-axis current waveform according to the set waveform amplitude instruction and the set waveform frequency instruction.

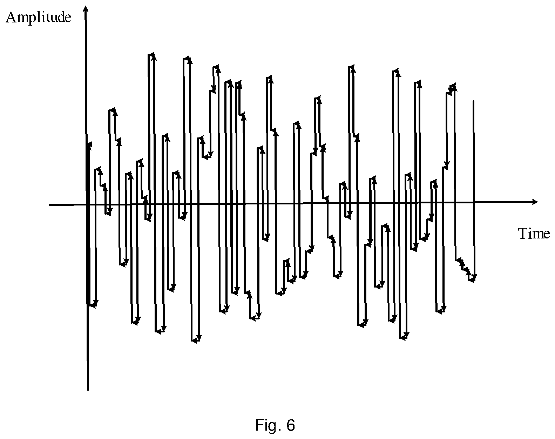

An internal structure of the first random amplitude instruction generation module 211b11 may be shown in Fig. 5; and an internal structure of the first random frequency instruction generation module 211b12 may be shown in Fig. 6. The waveform amplitude instruction and the waveform frequency instruction may be configured to provide instruction reference to a d-axis current waveform outputted by the current waveform generation module 211b13. Setting modes of the waveform amplitude instruction and the waveform frequency instruction may be adaptively set by the user according to actual requirements. This embodiment of the disclosure is not limited thereto.

The d-axis current waveform may correspond to the d-axis current heating instruction on a one-to-one basis. For example, when the d-axis current heating instruction is an alternating current instruction that is in a square wave form and includes the amplitude and frequency changes, the d-axis current waveform is an alternating square wave of the amplitude and frequency changes; when the d-axis current heating instruction is an alternating current instruction that is in a sine wave form and includes the amplitude and frequency changes, the d-axis current waveform is an alternating sine wave of the amplitude and frequency changes; when the d-axis current heating instruction is an alternating current instruction that is in a triangular wave form and includes the amplitude and frequency changes, the d-axis current waveform is an alternating triangular wave of the amplitude and frequency changes; when the d-axis current heating instruction is an alternating current instruction that is in a trapezoidal wave form and includes the amplitude and frequency changes, the d-axis current waveform is an alternating trapezoidal wave of the amplitude and frequency changes; and when the d-axis current heating instruction is an alternating current instruction that is in a step wave form and includes the amplitude and frequency changes, the d-axis current waveform is an alternating step wave of the amplitude and frequency changes.

Optionally, the first random amplitude instruction generation module 211b11 is configured to output the set waveform amplitude instruction by using a random number generation function, a random number lookup table, or a set amplitude.

The first random frequency instruction generation module 211b12 is configured to output the set waveform frequency instruction by using the random number generation function, the random number lookup table, or a set frequency.

The random number generation function and the random number lookup table are configured to provide an instruction generation basis to the waveform amplitude instruction outputted by the first random amplitude instruction generation module 211b11, and provide an instruction generation basis to the waveform frequency instruction outputted by the first random frequency instruction generation module 211b12.

Signal types of the waveform amplitude instruction and the waveform frequency instruction may be digital signals, and numerical systems of the two waveform instructions may be binary. This embodiment of the disclosure is not limited thereto. Transmission modes of the two waveform instructions may be wired transmission, or may be wireless transmission.

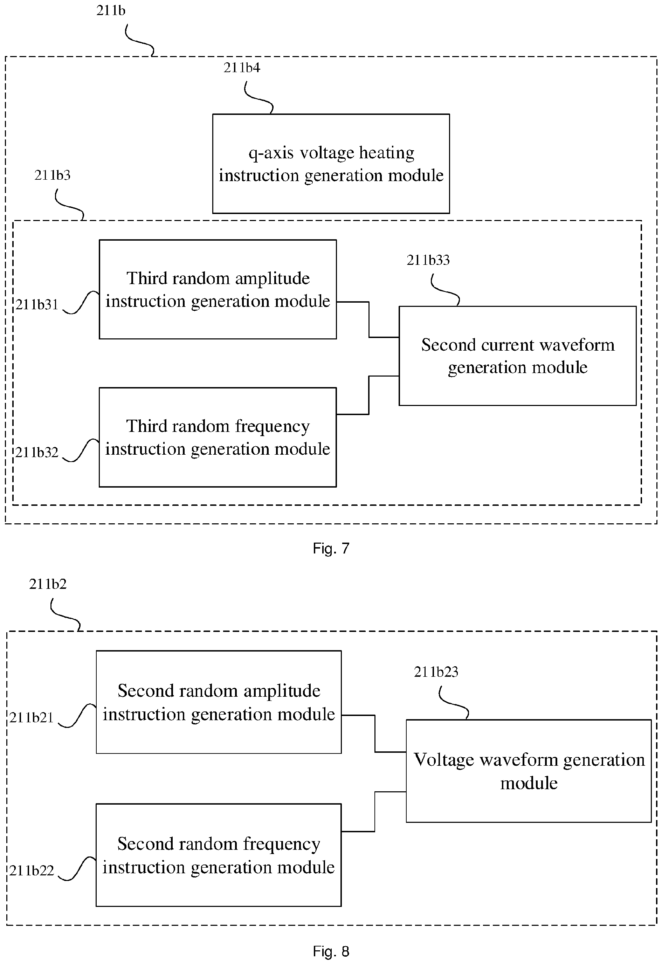

In another embodiment, Fig. 7 is a schematic structural diagram of a heating instruction generation module of another electric vehicle according to an embodiment of the disclosure. Referring to Fig. 7, optionally, the heating instruction generation module 211b may include a q-axis current heating instruction generation module 211b3 and/or a q-axis voltage heating instruction generation module 211b4. The q-axis current heating instruction generation module 211b3 is configured to generate the q-axis current heating instruction of amplitude and frequency changes. The q-axis voltage heating instruction generation module 211b4 is configured to generate the q-axis voltage heating instruction of amplitude and frequency changes.

The q-axis current heating instruction generation module 211b3 may include a third random amplitude instruction generation module 211b31, a third random frequency instruction generation module 211b32, and a second current waveform generation module 211b33. The third random amplitude instruction generation module 211b31 is configured to generate a set waveform amplitude instruction. The third random frequency instruction generation module 211b32 is configured to generate a set waveform frequency instruction. The second current waveform generation module 211b33 is configured to output a q-axis current waveform according to the set waveform amplitude instruction and the set waveform frequency instruction.

The q-axis current waveform may correspond to the q-axis current heating instruction on a one-to-one basis. For example, when the q-axis current heating instruction is an alternating current instruction that is in a square wave form and includes the amplitude and frequency changes, the q-axis current waveform is an alternating square wave of the amplitude and frequency changes; when the q-axis current heating instruction is an alternating current instruction that is in a sine wave form and includes the amplitude and frequency changes, the q-axis current waveform is an alternating sine wave of the amplitude and frequency changes; when the q-axis current heating instruction is an alternating current instruction that is in a triangular wave form and includes the amplitude and frequency changes, the q-axis current waveform is an alternating triangular wave of the amplitude and frequency changes; when the q-axis current heating instruction is an alternating current instruction that is in a trapezoidal wave form and includes the amplitude and frequency changes, the q-axis current waveform is an alternating trapezoidal wave of the amplitude and frequency changes; and when the q-axis current heating instruction is an alternating current instruction that is in a step wave form and includes the amplitude and frequency changes, the q-axis current waveform is an alternating step wave of the amplitude and frequency changes.

Optionally, the third random amplitude instruction generation module 211b31 is configured to output the set waveform amplitude instruction by using a random number generation function, a random number lookup table, or a set amplitude.

The third random frequency instruction generation module 211b32 is configured to output the set waveform frequency instruction by using the random number generation function, the random number lookup table, or a set frequency.

In still another embodiment, the heating instruction generation module 211b of an electric vehicle may further include the d-axis current heating instruction generation module 211b1, and/or the d-axis voltage heating instruction generation module 211b2, and/or the q-axis current heating instruction generation module 211b3, and/or the q-axis voltage heating instruction generation module 211b4. The technical principles and implemented effects of the module are similar, which are not described herein again.

According to the technical solution of this embodiment, by means of providing the d-axis current heating instruction generation module including the first random amplitude instruction generation module, the first random frequency instruction generation module, and the current waveform generation module, the d-axis current heating instruction of amplitude and frequency changes can be outputted. The motor is driven on the basis of the d-axis current heating instruction, and the power battery is heated in the form of charging and discharging. In this way, the problem of large heating noise of an existing battery heating mode is overcome. Therefore, the effect of heating the power battery on the basis of the existing power system of the vehicle, and significantly weakening battery heating noise without increasing automobile manufacturing costs is achieved.

### Embodiment V

Fig. 8 is a schematic structural diagram of a d-axis voltage heating instruction generation module of an electric vehicle according to Embodiment V of the disclosure. This embodiment is described on the basis of Embodiment IV of the disclosure. As shown in Fig. 8, optionally, the d-axis voltage heating instruction generation module 211b2 includes a second random amplitude instruction generation module 211b21, a second random frequency instruction generation module 211b22, and a voltage waveform generation module 211b23.

The second random amplitude instruction generation module 211b21 is configured to generate a set waveform amplitude instruction.

The second random frequency instruction generation module 211b22 is configured to generate a set waveform frequency instruction.

The voltage waveform generation module 211b23 is configured to output a d-axis voltage waveform according to the set waveform amplitude instruction and the set waveform frequency instruction.

The second random amplitude instruction generation module 211b21 may be configured to output the set waveform amplitude instruction by using a random number generation function, a random number lookup table, or a set amplitude.

The second random frequency instruction generation module 211b22 may be configured to output the set waveform frequency instruction by using the random number generation function, the random number lookup table, or a set frequency.

The waveform amplitude instruction and the waveform frequency instruction may be configured to provide instruction reference to a d-axis voltage waveform outputted by the voltage waveform generation module 211b23.

The d-axis voltage waveform may correspond to the d-axis voltage heating instruction on a one-to-one basis. For example, when the d-axis voltage heating instruction is an alternating voltage instruction that is in a square wave form and includes the amplitude and frequency changes, the d-axis voltage waveform is an alternating square wave of the amplitude and frequency changes; when the d-axis voltage heating instruction is an alternating voltage instruction that is in a sine wave form and includes the amplitude and frequency changes, the d-axis voltage waveform is an alternating sine wave of the amplitude and frequency changes; when the d-axis voltage heating instruction is an alternating voltage instruction that is in a triangular wave form and includes the amplitude and frequency changes, the d-axis voltage waveform is an alternating triangular wave of the amplitude and frequency changes; when the d-axis voltage heating instruction is an alternating voltage instruction that is in a trapezoidal wave form and includes the amplitude and frequency changes, the d-axis voltage waveform is an alternating trapezoidal wave of the amplitude and frequency changes; and when the d-axis voltage heating instruction is an alternating voltage instruction that is in a step wave form and includes the amplitude and frequency changes, the d-axis voltage waveform is an alternating step wave of the amplitude and frequency changes.

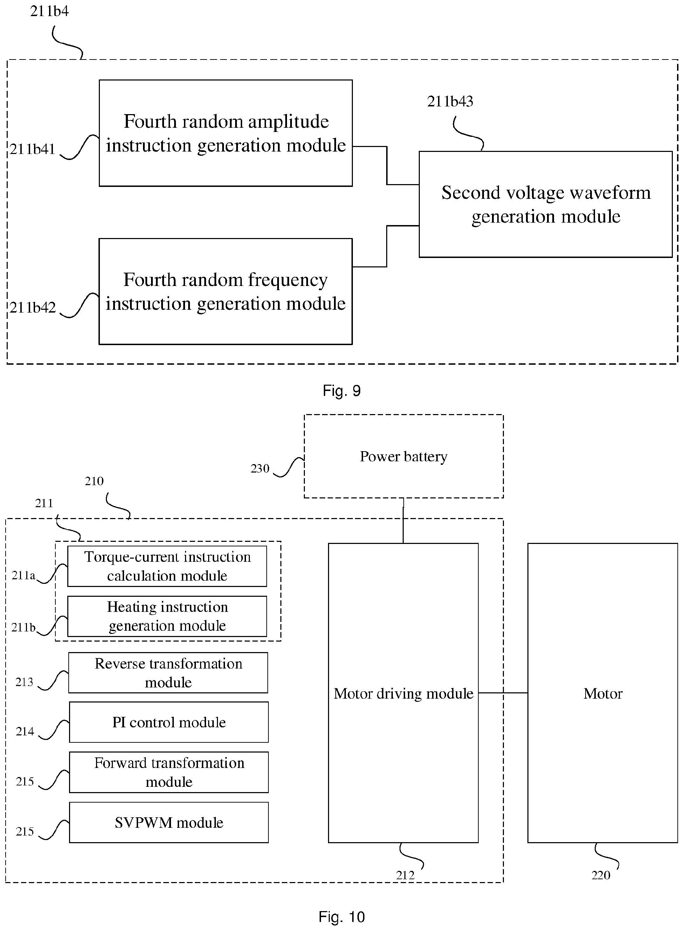

In another embodiment, Fig. 9 is a schematic structural diagram of a q-axis voltage heating instruction generation module of an electric vehicle according to an embodiment of the disclosure. This embodiment is described on the basis of the schematic structural diagram of the heating instruction generation module of another electric vehicle shown in Fig. 7.

Referring to Fig. 9, optionally, the q-axis voltage heating instruction generation module 211b4 may include a fourth random amplitude instruction generation module 211b41, a fourth random frequency instruction generation module 211b42, and a second voltage waveform generation module 211b43. The fourth random amplitude instruction generation module 211b41 is configured to generate a set waveform amplitude instruction. The fourth random frequency instruction generation module 211b42 is configured to generate a set waveform frequency instruction. The second voltage waveform generation module 211b43 is configured to output a q-axis voltage waveform according to the set waveform amplitude instruction and the set waveform frequency instruction.

The fourth random amplitude instruction generation module 211b41 may be configured to output the set waveform amplitude instruction by using a random number generation function, a random number lookup table, or a set amplitude.

The fourth random frequency instruction generation module 211b42 may be configured to output the set waveform frequency instruction by using the random number generation function, the random number lookup table, or a set frequency.

The waveform amplitude instruction and the waveform frequency instruction may be configured to provide instruction reference to the q-axis voltage waveform outputted by the second voltage waveform generation module 211b43.

The q-axis voltage waveform may correspond to the q-axis voltage heating instruction on a one-to-one basis. For example, when the q-axis voltage heating instruction is an alternating voltage instruction that is in a square wave form and includes the amplitude and frequency changes, the q-axis voltage waveform is an alternating square wave of the amplitude and frequency changes; when the q-axis voltage heating instruction is an alternating voltage instruction that is in a sine wave form and includes the amplitude and frequency changes, the q-axis voltage waveform is an alternating sine wave of the amplitude and frequency changes; when the q-axis voltage heating instruction is an alternating voltage instruction that is in a triangular wave form and includes the amplitude and frequency changes, the q-axis voltage waveform is an alternating triangular wave of the amplitude and frequency changes; when the q-axis voltage heating instruction is an alternating voltage instruction that is in a trapezoidal wave form and includes the amplitude and frequency changes, the q-axis voltage waveform is an alternating trapezoidal wave of the amplitude and frequency changes; and when the q-axis voltage heating instruction is an alternating voltage instruction that is in a step wave form and includes the amplitude and frequency changes, the q-axis voltage waveform is an alternating step wave of the amplitude and frequency changes.

In addition, value selection of the waveform amplitude instruction and the waveform frequency instruction may be determined according to a speed requirement of battery heating, and upper limits of hardware capabilities of the motor and the motor controller. If the amplitude of an excitation waveform is larger, a heating speed of the power battery is faster, but it is still necessary to meet the requirement that a current value of the motor controller does not exceed the maximum permissible current value. If the frequency of the excitation waveform is lower, the heating speed of the power battery is faster, but it is still necessary to meet the requirement of safety characteristics of the power battery.

According to the technical solution of this embodiment, by means of providing the d-axis voltage heating instruction generation module including the second random amplitude instruction generation module, the second random frequency instruction generation module, and the voltage waveform generation module, the d-axis voltage heating instruction of amplitude and frequency changes can be outputted. The motor is driven on the basis of the d-axis voltage heating instruction, and the power battery is heated in the form of charging and discharging. In this way, the problem of large heating noise of an existing battery heating mode is overcome. Therefore, the effect of heating the power battery on the basis of the existing power system of the vehicle, and significantly weakening battery heating noise without increasing automobile manufacturing costs is achieved.

### Embodiment VI

Fig. 10 is a schematic structural diagram of a power system of an electric vehicle according to Embodiment VI of the disclosure. This embodiment is added on the basis of Embodiment III of the disclosure. As shown in Fig. 10, optionally, the motor controller 210 further includes a reverse transformation module 213, a Proportional Integral (PI) control module 214, a forward transformation module 215, and a Space Vector Pulse Width Modulation (SVPWM) module 216.

The reverse transformation module 213 is configured to transform a motor three-phase current from a stationary coordinate system to a rotational coordinate system, so as to obtain a d-axis current value and a q-axis current value.

The control module 214 is configured to receive a difference value between the value of the d-axis current instruction and the d-axis current value, and a difference value between the value of the q-axis current instruction and the q-axis current value, and output a d-axis voltage instruction and a q-axis voltage instruction; or receive a difference value between the value of the d-axis current heating instruction and the d-axis current value, and a difference value between the value of the q-axis current instruction set to zero and the q-axis current value, and output the d-axis voltage instruction and the q-axis voltage instruction.

The forward transformation module 215 is configured to transform the d-axis voltage instruction into an α-axis voltage instruction, and transform the q-axis voltage instruction into a β-axis voltage instruction.

The SVPWM module 216 is configured to calculate and output a PWM duty cycle instruction on the basis of the α-axis voltage instruction and the β-axis voltage instruction, and control the turn-on and turn-off of a power device of an inverter, so as to drive the motor 220.

Signal types of the d-axis current value and the q-axis current value may be digital signals, and numerical systems of the d-axis current value and the q-axis current value may be binary. This embodiment of the disclosure is not limited thereto. Transmission modes of the d-axis current value and the q-axis current value may be wired transmission, or may be wireless transmission.

The value of the d-axis current instruction is configured to subtract from the d-axis current value. A difference mode between the value of the d-axis current instruction and the d-axis current value is achieved by means of a subtractor or a comparator. This embodiment of the disclosure is not limited thereto. A signal type of the value of the d-axis current instruction may be a digital signal, and a numerical system of the value of the d-axis current instruction may be binary. This embodiment of the disclosure is not limited thereto. A transmission mode of the value of the d-axis current instruction may be wired transmission, or may be wireless transmission.

The value of the q-axis current instruction is configured to subtract from the q-axis current value. A difference mode between the value of the q-axis current instruction and the q-axis current value is achieved by means of the subtractor or the comparator. This embodiment of the disclosure is not limited thereto. A signal type of the value of the q-axis current instruction may be a digital signal, and a numerical system of the value of the q-axis current instruction may be binary. This embodiment of the disclosure is not limited thereto. A transmission mode of the value of the q-axis current instruction may be wired transmission, or may be wireless transmission.

The value of the d-axis current heating instruction is configured to subtract from the d-axis current value. A difference mode between the value of the d-axis current heating instruction and the d-axis current value is achieved by means of the subtractor or the comparator. This embodiment of the disclosure is not limited thereto. A signal type of the value of the d-axis current heating instruction may be a digital signal, and a numerical system of the value of the d-axis current heating instruction may be binary. This embodiment of the disclosure is not limited thereto. A transmission mode of the value of the d-axis current heating instruction may be wired transmission, or may be wireless transmission.

The value of the q-axis current heating instruction is configured to subtract from the q-axis current value. A difference mode between the value of the q-axis current heating instruction and the q-axis current value is achieved by means of the subtractor or the comparator. This embodiment of the disclosure is not limited thereto. A signal type of the value of the q-axis current heating instruction may be a digital signal, and a numerical system of the value of the q-axis current heating instruction may be binary. This embodiment of the disclosure is not limited thereto. A transmission mode of the value of the q-axis current heating instruction may be wired transmission, or may be wireless transmission.

As conversion objects of the forward transformation module 215, the d-axis voltage instruction and the q-axis voltage instruction may be respectively transformed into the α-axis voltage instruction and the β-axis voltage instruction by the forward transformation module 215. Signal types of the α-axis voltage instruction and the β-axis voltage instruction may be analog signals; and transmission modes of the two voltage instructions may be wired transmission, or may be wireless transmission.

The α-axis voltage instruction and the β-axis voltage instruction are configured to provide instruction reference to the PWM duty cycle instruction calculated and outputted by the SVPWM module 216. The PWM duty cycle instruction may be a digital signal, and a numerical system of the PWM duty cycle instruction may be binary. This embodiment of the disclosure is not limited thereto. A transmission mode of the PWM duty cycle instruction may be wired transmission, or may be wireless transmission.

The power device of the inverter may be any model or category of an Insulated Gate Bipolar Transistor (IGBT) or a Metal-Oxide-Semiconductor Field-Effect Transistor (MOSFET). This embodiment of the disclosure is not limited thereto.

In another embodiment, the PI control module 214 may be configured to receive the difference value between the value of the d-axis current heating instruction set to zero and the d-axis current value, and the difference value between the value of the q-axis current instruction and the q-axis current value, and output the d-axis voltage instruction and the q-axis voltage instruction.

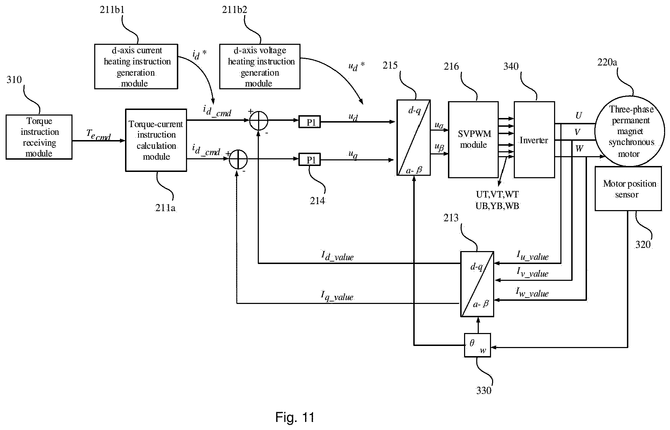

In still another embodiment, Fig. 11 is a functional block diagram of a power system of an electric vehicle according to an embodiment of the disclosure. Referring to Fig. 11, on the basis of the technical solution, optionally, the electric vehicle further includes a torque instruction receiving module 310, a motor position sensor 320, a motor position information transmission module 330, and an inverter 340. The motor position sensor 320 may be a rotary transformer, or may be an incremental encoder, or may be any sensor that may detect motor rotor position information. This embodiment of the disclosure is described by using a three-phase permanent magnet synchronous motor 220a as an example, but do not constitute a limitation of the embodiments of the disclosure.

In the power system of the electric vehicle, after the motor position sensor 320 completes a detection action on a motor rotor position θ and motor rotating speed information ω of the three-phase permanent magnet synchronous motor 220a, the motor position information transmission module 320 transmits the motor rotor position θ and the motor rotating speed information ω to the forward transformation module 215 and the reverse transformation module 213. The reverse transformation module 213 completes coordinate transformation on the basis of three-phase currents I_{u_value}, I_{v_value} and I_{w_value} of the three-phase permanent magnet synchronous motor 220a, and obtains the d-axis current value I_{d_value} and the q-axis current value I_{q_value}. In the mode of the motor outputting torque, the torque instruction receiving module 310 receives a torque instruction Te_{cmd} sent by a VCU, and sends the same to the torque-current instruction calculation module 211a. The torque-current instruction calculation module 211a converts the value of the torque instruction Tecmd into the d-axis current instruction id_cmd and the q-axis current instruction i_{q_cmd}. After difference is performed on the d-axis current instruction i_{d_cmd} and the q-axis current instruction i_{q_cmd} and the d-axis current value I_{d_value} and the q-axis current value I_{q_value}, respectively, the difference value between the d-axis current instruction i_{d_cmd} and the d-axis current value I_{d_value} and the difference value between the q-axis current instruction i_{q_cmd} and the q-axis current value I_{q_value} are inputted into the PI control module 214. The PI control module 214 calculates and outputs the d-axis voltage instruction u_{d} and the q-axis voltage instruction u_{q}. After a coordinate transformation action of the forward transformation module 215 is performed on the d-axis voltage instruction u_{d} and the q-axis voltage instruction u_{q}, the d-axis voltage instruction u_{d} is transformed into the α-axis voltage instruction uα, and the q-axis voltage instruction u_{q} is transformed into the β-axis voltage instruction uβ. After the α-axis voltage instruction uα and the β-axis voltage instruction uβ are inputted into the SVPWM module 216, through the calculation of the SVPWM module 216, 6-path PWM duty cycle instructions are outputted, and the turn-on and turn-off of the 6 power devices UT, VT, WT, UB, VB and WB of the inverter 340 are controlled on the basis of the 6-path PWM duty cycle instructions, such that the three-phase permanent magnet synchronous motor 220a is controlled to output a specified torque.

On the basis of the motor control solution, the d-axis current heating instruction generation module 211b1 may give the d-axis current heating instruction as i_{d}* and give the q-axis current heating instruction as 0 in the form of an alternating waveform instruction including the amplitude and frequency changes, or may give the q-axis current heating instruction as i_{q}* and give the d-axis current heating instruction as 0 in the form of the alternating waveform instruction including the amplitude and frequency changes. The d-axis voltage heating instruction generation module 211b2 may give the d-axis voltage heating instruction as u_{d}* and give the q-axis voltage heating instruction as 0 in the form of the alternating waveform instruction including the amplitude and frequency changes, or may give the q-axis voltage heating instruction as u_{q}* and give the d-axis voltage heating instruction as 0 in the form of the alternating waveform instruction including the amplitude and frequency changes.

The reason and advantage that the d-axis current heating instruction generation module 211b1 gives the d-axis current heating instruction as id* in the form of the alternating waveform instruction including the amplitude and frequency changes are described as follows. If the d-axis current heating instruction generation module 211b1 gives the d-axis current heating instruction in the form of the alternating waveform instruction, although the alternating d-axis current heating instruction can ensure that the three-phase permanent magnet synchronous motor 220a does not rotate, requirements for parking heating may be met. However, the alternating d-axis current heating instruction causes the three-phase permanent magnet synchronous motor 220a to achieve reciprocating force in a radial direction, such that regular single frequency noise is generated during battery heating, and such noise may be a nuisance to a user who is inside the vehicle. Therefore, according to the motor control method provided in the embodiments of the disclosure, the random waveform amplitude instruction and the random waveform frequency instruction are used, such that the frequency distribution of the noise of an electric driving system during battery heating tends to be dispersed, thereby significantly reducing the noise in the vehicle.

The reason and advantage that the d-axis voltage heating instruction generation module 211b2 gives the d-axis voltage heating instruction as u_{d}* in the form of the alternating waveform instruction including the amplitude and frequency changes are similar, and are not described in detail again.

On the basis of the motor control solution, a bus terminal can form alternating charging and discharging currents, and the alternating charging and discharging currents can implement a power battery heating function under a low-temperature working condition. In addition, giving the d-axis or q-axis heating current or voltage instructions as 0 is to ensure that the three-phase permanent magnet synchronous motor 220a does not continuously output torque during the heating of the power battery. Therefore, the embodiment solution also complies with the working condition that the vehicle is in a parking state when a battery is heated and charged at a low temperature.

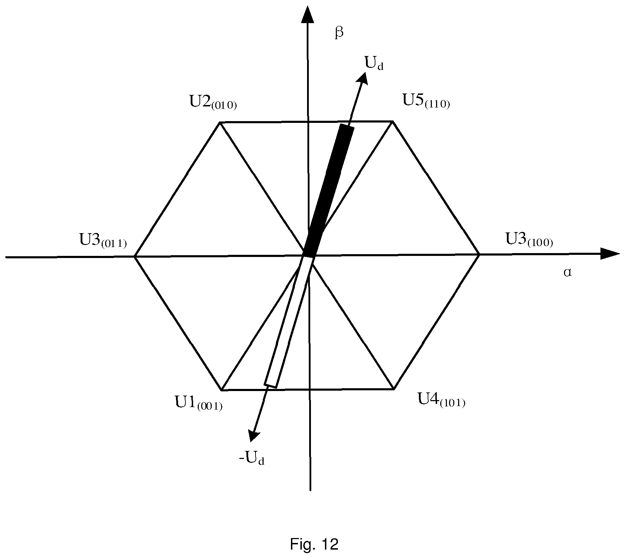

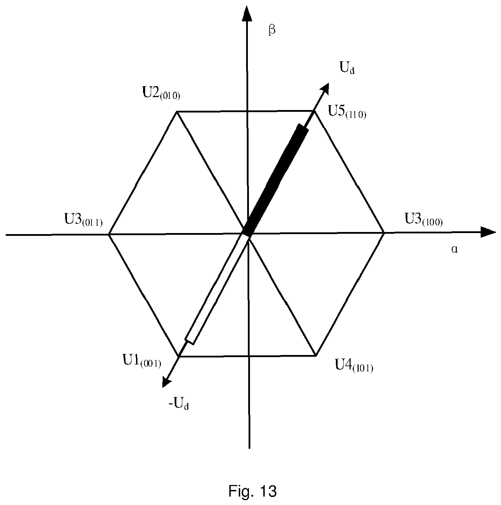

In still another embodiment, Fig. 12 is a schematic diagram of a motor rotor position of an electric vehicle that does not enter a battery heating mode under a parking working condition according to an embodiment of the disclosure. Fig. 13 is a schematic diagram of a motor rotor position of an electric vehicle that enters a battery heating mode under a parking working condition according to an embodiment of the disclosure.

Referring to Fig. 12 and Fig. 13, on the basis of the plurality of technical solutions, optionally, since a motor rotor stays closest to fundamental vectors U5 and U1 when the motor rotor is not in the battery heating mode, the rotor moves to the positions where the fundamental vectors U5 and U1 are located when the rotor is in the battery heating mode. According to the basic principle of a SVPWM algorithm, a switching device of the inverter is switched between two switching modes of U5(110) and U1 (001), and the charging and discharging current is finally formed at the bus terminal. The battery is heated by the charging and discharging current.

Optionally, when the rotor position of the vehicle in a parking working condition is located at another position, the rotor position of the motor moves to the positions where 6 fundamental vectors are located after the battery heating mode is entered, and a heating operation is performed on the battery on the basis of switching device states represented by the fundamental vectors.

According to the technical solution of this embodiment, the d-axis current heating instruction generation module gives the alternating d-axis current heating instruction including the amplitude and frequency changes, and the d-axis voltage heating instruction generation module gives the alternating d-axis voltage heating instruction including the amplitude and frequency changes, such that the alternating charging and discharging current is formed at the system bus terminal, and the alternating charging and discharging current heats the power battery under the low-temperature working condition. In this way, the defects of large heating noise, poor heating uniformity, high hardware cost and low heating efficiency of an existing battery heating mode are filled. Therefore, the effect of uniformly heating the power battery on the basis of an existing power system of the vehicle, shortening the low-temperature charging time of the vehicle, and significantly weakening battery heating noise without increasing automobile manufacturing costs is achieved.

## Claims

1. A motor control method, executed by a motor controller, wherein the motor controller comprises a control module and a motor driving module; the control module comprises a torque-current instruction calculation module and a heating instruction generation module; the motor driving module is connected to a power battery and a motor; and the method comprises:
in a mode of a motor outputting torque, converting the torque instruction value into a d-axis current instruction and a q-axis current instruction by the torque-current instruction calculation module;
in a battery heating mode, generating at least one of a d-axis voltage heating instruction or a d-axis current heating instruction by the heating instruction generation module, wherein the d-axis voltage heating instruction and the d-axis current heating instruction both comprise waveform instructions of amplitude and frequency changes; and
driving, by the motor driving module, the motor to output a set torque according to the d-axis current instruction and the q-axis current instruction, or driving the motor according to at least one of the d-axis voltage heating instruction or the d-axis current heating instruction, so as to heat the power battery in the form of charging and discharging.

2. The method according to claim 1, wherein driving the motor by the motor driving module according to at least one of the d-axis voltage heating instruction or the d-axis current heating instruction comprises:
outputting, by the motor driving module, a driving signal to the motor according to at least one of the d-axis voltage heating instruction or the d-axis current heating instruction, so as to control the motor to not rotate.

3. The method according to claim 1, further comprising:
turning on the battery heating mode when the control module identifies, when a battery is in a low-temperature state, that a charging gun is inserted in a vehicle or a user remote charging reservation request is received.

4. The method according to claim 1, wherein in the battery heating mode, the q-axis current instruction and a q-axis voltage instruction are zero.

5. An electric vehicle, comprising a motor controller, a motor, and a power battery, wherein the motor controller comprises a control module and a motor driving module; the control module comprises a torque-current instruction calculation module and a heating instruction generation module; the motor driving module is connected to the power battery and the motor;
the torque-current instruction calculation module is configured to, in a mode of a motor outputting torque, convert a torque instruction value into a d-axis current instruction and a q-axis current instruction;
the heating instruction generation module is configured to, in a battery heating mode, generate at least one of a d-axis voltage heating instruction or a d-axis current heating instruction, wherein the d-axis voltage heating instruction and the d-axis current heating instruction both comprise waveform instructions of amplitude and frequency changes; and
the motor driving module is configured to drive the motor to output a set torque according to the d-axis current instruction and the q-axis current instruction, or drive the motor according to at least one of the d-axis voltage heating instruction or the d-axis current heating instruction, so as to heat the power battery in the form of charging and discharging.

6. The electric vehicle according to claim 5, wherein the heating instruction generation module comprises at least one of a d-axis current heating instruction generation module or a d-axis voltage heating instruction generation module;
the d-axis current heating instruction generation module is configured to generate the d-axis current heating instruction of amplitude and frequency changes; and
the d-axis voltage heating instruction generation module is configured to generate the d-axis voltage heating instruction of amplitude and frequency changes.

7. The electric vehicle according to claim 6, wherein the d-axis current heating instruction generation module comprises a first random amplitude instruction generation module, a first random frequency instruction generation module, and a current waveform generation module;
the first random amplitude instruction generation module is configured to generate a set waveform amplitude instruction;
the first random frequency instruction generation module is configured to generate a set waveform frequency instruction; and
the current waveform generation module is configured to output a d-axis current waveform according to the set waveform amplitude instruction and the set waveform frequency instruction.

8. The electric vehicle according to claim 7, wherein the first random amplitude instruction generation module is configured to output the set waveform amplitude instruction by using a random number generation function, a random number lookup table, or a set amplitude; and
the first random frequency instruction generation module is configured to output the set waveform frequency instruction by using the random number generation function, the random number lookup table, or a set frequency.

9. The electric vehicle according to claim 6, wherein the d-axis voltage heating instruction generation module comprises a second random amplitude instruction generation module, a second random frequency instruction generation module, and a voltage waveform generation module;
the second random amplitude instruction generation module is configured to generate a set waveform amplitude instruction;
the second random frequency instruction generation module is configured to generate a set waveform frequency instruction; and
the voltage waveform generation module is configured to output a d-axis voltage waveform according to the set waveform amplitude instruction and the set waveform frequency instruction.

10. The electric vehicle according to claim 5, wherein the motor controller further comprises:
a reverse transformation module, configured to transform a motor three-phase current from a stationary coordinate system to a rotational coordinate system, so as to obtain a d-axis current value and a q-axis current value;
a Proportional Integral (PI) control module, configured to receive a difference value between the value of the d-axis current instruction and the d-axis current value, and a difference value between the value of the q-axis current instruction and the q-axis current value, and output a d-axis voltage instruction and a q-axis voltage instruction; or receive a difference value between the value of the d-axis current heating instruction and the d-axis current value, and a difference value between the value of the q-axis current instruction set to zero and the q-axis current value, and output the d-axis voltage instruction and the q-axis voltage instruction;
a forward transformation module, configured to transform the d-axis voltage instruction into an Alfa-axis voltage instruction, and transform the q-axis voltage instruction into a Beta-axis voltage instruction; and
a Space Vector Pulse Width Modulation (SVPWM) module, configured to calculate and output a PWM duty cycle instruction on the basis of the Alfa-axis voltage instruction and the Beta-axis voltage instruction, and control the turn-on and turn-off of a power device of an inverter on the basis of the PWM duty cycle instruction, so as to drive the motor.
